# FASCICULE DE BREVET EUROPEEN

(11) **EP 1 369 725 B1**
(45) Date de publication et mention de la délivrance du brevet: **19.11.2008**
(21) Numéro de dépôt: 03291322.0
(22) Date de dépôt: 03.06.2003
(51) Int. Cl.: G02B 6/44

(54) **Câble à fibre optique comprenant une composition absorbant l'hydrogène**
Glasfaserkabel mit einer wasserstoffabsorbierenden Verbindung
Optical fibre cable comprising a hydrogen absorbing composition

(30) Priorité: 06.06.2002 FR 0206963
(43) Date de publication de la demande: 10.12.2003
(73) Titulaire: Alcatel Lucent, 75008 Paris (FR)
(72) Inventeur: Decaumont, Anne, 91220 Bretigny sur Orge (FR); Andrieu, Xavier, 91220 Bretigny sur Orge (FR)
(74) Mandataire: Sciaux, Edmond

(56) Documents cités:
- EP-A- 0 402 895
- EP-A- 0 632 301
- WO-A-01/46736
- US-A- 3 299 016
- US-A- 5 000 541
- US-A- 5 258 435
- US-A- 5 686 520

## Description

La présente invention se rapporte à un câble à fibre optique comprenant une composition capable d'absorber l'hydrogène.

La fibre optique comporte une partie servant de guide d'onde, généralement en silice éventuellement dopée, composé d'un coeur (core) entouré d'une gaine optique (cladding). La partie guidante est habituellement recouverte d'un revêtement (coating) de protection, habituellement en polymère et éventuellement multicouche, pour la protéger de son environnement. Ce revêtement peut être coloré pour permettre de distinguer les fibres les unes des autres. Une telle fibre revêtue est le plus souvent destinée à être incorporée dans un câble, notamment destiné aux télécommunications. Un câble de télécommunication est un câble comprenant au moins une fibre optique revêtue et une enveloppe (housing tube), éventuellement multicouche, disposée autour de la fibre. L'espace libre entre la fibre optique et l'enveloppe est le plus souvent comblé par un gel de remplissage (filling gel).

Le problème de l'atténuation de la transmission du signal optique due à l'absorption de l'hydrogène par le réseau de la silice des fibres optiques est connu. L'hydrogène peut être généré par les composants du câble eux-mêmes ou par un phénomène extérieur, par exemple la corrosion. L'effet préjudiciable de l'hydrogène sur les fibres optiques entraîne une dégradation des performances optiques et mécaniques des fibres avec lesquelles il est en contact. Par conséquent la pression partielle d'hydrogène doit être minimisée pour préserver l'espérance de vie du câble. Cet effet préjudiciable existe même si l'hydrogène est présent sous forme de traces dans le câble, c'est pourquoi il est très important d'éliminer toute trace d'hydrogène, même lorsque le câble se trouve dans une atmosphère saturée en hydrogène. Pour ôter l'hydrogène de l'environnement de la fibre, on incorpore généralement dans certaines couches de revêtement des substances susceptibles de fixer l'hydrogène. Plusieurs solutions ont été évoquées.

Le document FR-2 803 045 décrit une fibre optique comprenant, dans le revêtement de protection extérieure à la partie guidante, un composé intermétallique formé d'au moins deux métaux, dont la pression de plateau lors de la formation d'hydrure est inférieure ou égale à 5.10⁻²atm (1atm = 1,013.10⁵ Pa) mesurée par un procédé PCT (Pressure Composition Temperature). Le composé est de la forme ABₓM_{y}, où :
- A est constitué d'au moins un élément des colonnes IIa, IIIb, ou IVb de la Classification Périodique des Eléments (version CAS),
- B est constitué d'au moins un élément des colonnes Vb, VIII ou IIIa de la Classification Périodique des Eléments (version CAS), et
- Et M contient au moins un élément des colonnes VIb, VIIb, Ib ou IIb de la Classification Périodique des Eléments (version CAS),
   avec:
   0 ≤ x ≤ 10 et
   0 ≤ y ≤ 3 si A ne contient que des éléments de la colonne lia, ou
   0,2 ≤ y ≤ 3 si A contient au moins un élément des colonnes IIIb ou IVb
Un câble à fibre optique contenant un tel composé intermétallique est également décrit. La capacité de stockage de l'hydrogène est limitée à la capacité hydrure. La quantité d'hydrure qui peut être introduite est limitée afin de ne pas dégrader les caractéristiques mécaniques du revêtement. De ce fait la capacité d'absorption du revêtement reste encore insuffisante vis à vis du besoin.

Le document EP-0 632 301 décrit un câble de télécommunications à fibres optique dont l'âme comporte au moins une fibre optique dans une enveloppe. Le câble comprend, dans au moins une partie de son volume interne, une composition absorbant l'hydrogène. Ce document propose d'utiliser une composition absorbante comprenant un catalyseur tel qu'un métal de transition, un sel ou un complexe organique ou minéral d'un métal de transition, et un composé hydrocarboné particulier. Le composé hydrocarboné contient au moins 90% d'un hydrocarbure insaturé non-aromatique exempt de silicium qui est un hydrocarbure insaturé que l'on n'obtient pas par polymérisation de monomères englobant des diènes conjugués, l'hydrocarbure insaturé présentant :
i) une distribution de masse moléculaire valant environ une valeur moyenne qui se situe dans un intervalle restreint tel qu'il ne montrera aucun phénomène de séparation de phase significative par décantation ou par chromatographie sur un support fibreux,
ii) une viscosité à température ambiante comprise entre 500 et 70000 cSt,
iii) une viscosité à température ambiante inférieure à 70 000 cSt après un vieillissement par exposition à l'air en couche mince pendant au moins 7 jours à 100°C.

Cet hydrocarbure comporte des chaînes longues, les doubles liaisons étant localisées en bout de chaîne. Une telle composition absorbante a une viscosité qui varie avec la quantité d'hydrogène absorbée et n'est plus acceptable pour l'utilisateur.

Le document EP-0 402 895, afin de résoudre le problème de la résistance mécanique initiale d'une libre optique à revêtement étanché et de son vieillissement, propose une fibre optique comportant un coeur entouré d'une gaine optique de quartz dont la couche externe contient du fluor. La couche fluorée est entourée d'une couche de carbone comprenant au moins un composé hydrocarboné saturé, insaturé ou aromatique.

La présente invention a pour but de proposer une composition absorbant l'hydrogène, destinée à être utilisée dans un câble à fibre optique, dont la viscosité reste sensiblement égale quelle que soit la quantité d'hydrogène absorbée.

L'objet de la présente invention est un câble à fibre optique comportant au moins une fibre optique entourée d'un revêtement, une enveloppe, et une composition absorbant l'hydrogène comprenant un catalyseur et un composant absorbeur d'hydrogène (getter), caractérisé en ce que ledit composant absorbeur d'hydrogène est un mélange d'une matrice polymère non-absorbante et d'un composé organique absorbant l'hydrogène comportant au moins une triple liaison carbone-carbone.

Le composé organique absorbant l'hydrogène selon la présente invention est un hydrocarbure acétylénique, c'est-à-dire un hydrocarbure acyclique (ramifié ou linéaire) ou cyclique (avec ou sans chaîne latérale comportant une ou plusieurs triples liaison carbone-carbone. En présence d'un catalyseur d'hydrogénation, l'hydrogène s'additionne sur la triple liaison.

Le composé organique selon l'invention comporte une liaison acétylénique et dérive de l'acétylène par substitution d'au moins un des atomes d'hydrogène. Selon un premier mode de réalisation, le composé organique a pour formule générale : R¹ - C ≡ C - R², dans laquelle R¹ et R², identiques ou différents, sont choisis parmi un hydrocarbure acyclique linéaire ou ramifié, un hydrocarbure cyclique, un hydrocarbure saturé, un hydrocarbure insaturé, un hydrocarbure substitué par un hétéroatome.

Selon un deuxième mode de réalisation, le composé organique a pour formule générale : R¹ - C ≡ C - R², dans laquelle R¹ est un atome d'hydrogène et R² est choisi parmi un hydrocarbure acyclique linéaire ou ramifié, un hydrocarbure cyclique, un hydrocarbure saturé, un hydrocarbure insaturé, un hydrocarbure substitué par un hétéroatome.

L'hydrocarbure cyclique, saturé ou insaturé, peut être choisi parmi un hydrocarbure monocyclique, un hydrocarbure polycyclique, un hydrocarbure hétérocyclique, un hydrocarbure aromatique, un hydrocarbure condensé, un hydrocarbure spirannique et un hydrocarbure ponté.

L'hydrocarbure aliphatique ou cyclique peut éventuellement être substitué par un atome étranger, ou hétéro-atome, autre que C ou H.

Le composé organique selon l'invention peut se présenter sous forme solide ou liquide.

De préférence le composé organique absorbant l'hydrogène est choisi parmi le 1,4-bis(phényléthynyl)benzène, le 1,2-bis(phényléthynyl)benzène, le 9,10-bis(phényléthynyl)anthracène, le 5,12-bis(phényléthynyl)naphtacène, qui ont les formules suivantes:

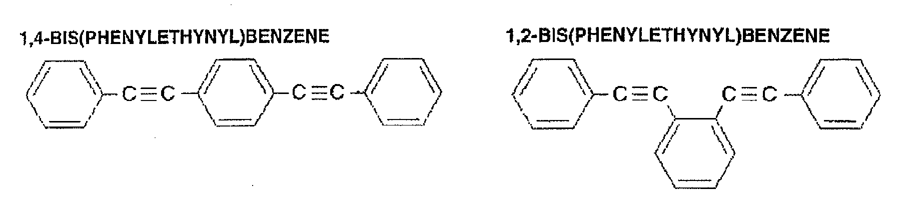

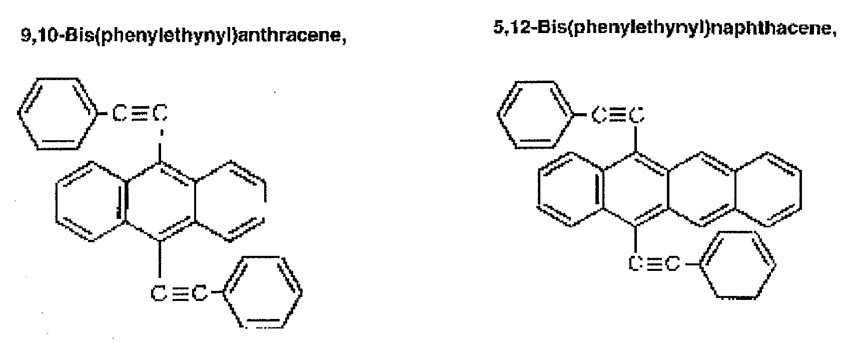

De préférence encore, le composé organique absorbant l'hydrogène selon l'invention est le 1,4-bis(phényléthynyl)benzène (DEB). C'est un solide cristallin qui a l'avantage de n'être ni toxique, ni mutagène. Une mole de 1,4-bis(phényléthynyl)benzène peut donc réagir avec quatre atomes d'hydrogène. Sa capacité d'absorption est de 240 à 330 cm³ d'hydrogène par gramme. Le mécanisme d'absorption est basé sur une série d'addition séquentielle d'hydrogène sur les triples liaisons, chaque étape ayant sa propre constante de vitesse.

Le DEB fond à 179°C. Un fois totalement hydrogéné, il fond à 87°C. Ainsi il conserve la forme solide quel que soit le taux d'hydrogénation et sa viscosité varie très peu. En le mélangeant avec une matrice qui ne réagit pas, on obtient une composition dont la viscosité reste sensiblement constante.

Avantageusement, le composé organique absorbant l'hydrogène représente au plus 25% en poids dudit composant absorbeur, de préférence au plus 10% en poids dudit composant absorbeur d'hydrogène. Une fois le composé organique mélangé à une matrice qui rempli la fonction de diluant, on obtient un composant absorbeur dont le coût est inférieur à celui du composé organique.

On peut utiliser comme catalyseur d'hydrogénation, les catalyseurs connus. On choisira de préférence un métal de transition, un complexe ou un sel d'un métal de transition. On utilisera par exemple du platine Pt ou du palladium Pd dispersé sur du charbon actif ou du nickel de Raney.

La matrice est choisie parmi les polymères usuels adaptés à la localisation de la composition dans le câble.

La composition selon l'invention peut être utilisée dans un câble à fibre optique comme gel de remplissage. Dans ce cas la matrice est de préférence un matériau siliconé ou un matériau polyoléfinique, et de préférence encore un matériau saturé. A titre d'exemple, comme matériau siliconé, on peut utiliser un composé organique de type silicone saturé correspondant à la formule générale ci-dessous :

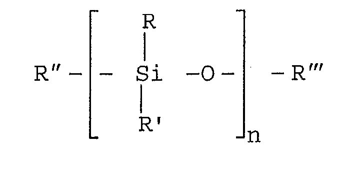

Dans cette formule, R et R' sont identiques ou différents et représentent des groupes alkyle, alcényle ou aryle; R" et R"' sont identiques ou différents et représentent un groupe alcényle, et n est un nombre entier. Dans la formule ci-dessus, on peut aussi choisir R et R' parmi les radicaux aliphatiques saturés ou insaturés, et les radicaux aromatiques ; dans ce cas, R" et R"' sont des radicaux aliphatiques insaturés.

La composition absorbant l'hydrogène selon l'invention peut aussi être utilisée pour la réalisation de l'enveloppe entourant la ou les fibres formant le câble. Dans ce cas la matrice est de préférence un polymère thermoplastique, comme le polytéréphtalate de butylène (PBTP).
Selon une forme particulière d'exécution de l'invention, la composition peut être déposée sous forme de couche sur la surface interne de l'enveloppe.

On peut encore utiliser cette composition pour réaliser le revêtement extérieur (secondary coating) d'une fibre optique isolée ou la gaine d'un ruban de plusieurs fibres optiques. La matrice est alors de préférence un polyuréthane (PU) acrylate.

L'invention a aussi pour objet un composant optique comprenant une composition absorbant l'hydrogène comme décrite précédemment.
Il peut s'agit d'un composant destiné aussi bien aux applications terrestres que sous-marines. On entend par "composant optique" un composant contenant une fibre optique qui joue le rôle d'un filtre ou d'un amplificateur optique. La composition se trouve alors de préférence dans le revêtement de la fibre optique.

D'autres caractéristiques et avantages de la présente invention apparaîtront au cours des exemples suivants de réalisation, donnés bien entendu à titre illustratif et non limitatif, et dans le dessin annexé sur lequel
- la figure 1 représente une vue en coupe d'un câble à fibre optique comportant comme gel de remplissage une composition selon la présente invention,
- la figure 2 montre une vue en coupe d'une variante d'un câble à fibre optique comportant une enveloppe constituée de la composition selon la présente invention,
- la figure 3 est une vue en coupe d'une fibre optique dont le couche externe du revêtement est constitué de la composition selon la présente invention.

### EXEMPLE 1

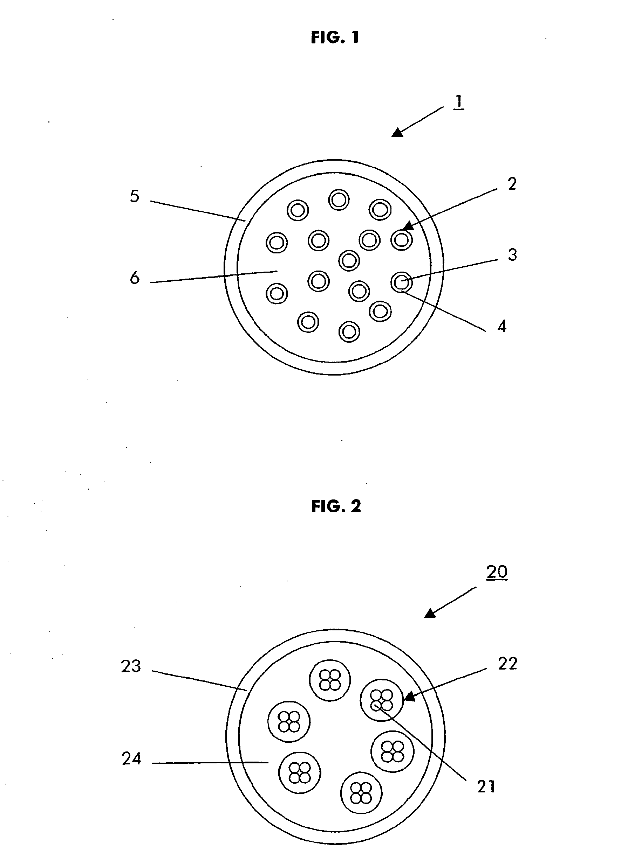

Le câble à fibres optique **1** représenté sur la figure 1 comporte des fibres optiques **2** comprenant une partie guidante **3** entourée d'un revêtement de protection **4**. Les fibres optiques **2** sont entourée d'une enveloppe commune **5**. Le volume laissé libre entre les fibres optiques **2** et l'enveloppe **5** est comblée par un gel de remplissage **6** qui empêche le déplacement des fibres, les protège des chocs et contribue à l'étanchéité du câble vis à vis de l'humidité.

Dans le câble **1**, le gel de remplissage **6** est constitué d'une composition absorbant l'hydrogène selon l'invention. Le catalyseur est du palladium Pd déposé sur du charbon actif à raison de 5% en poids de Pd. Le composant absorbeur d'hydrogène comprend une matrice à base hydrocarbonée de référence "OPTIFILL 5300" fourni par la société BP et un composé absorbant l'hydrogène qui est un DEB (1,4-bis(phényléthynyl)benzène) de référence "S870927" fourni par SIGMA-ALDRICH.
Le composé absorbant l'hydrogène est d'abord mélangé avec le catalyseur de façon mécanique, par exemple dans une jarre pendant quelques heures, par exemple dans des proportions massiques respectives de 75% de composé et 25% de catalyseur. Ce mélange est ensuite incorporé dans la matrice polymère de façon mécanique, par exemple à l'aide d'un malaxeur, par exemple dans des proportions massiques respectives de 5% de mélange et 95% de matrice polymère. On obtient ainsi la composition selon l'invention qui est utilisée comme gel de remplissage et mise en place dans le câble dans l'espace libre à l'intérieur de l'enveloppe.

### EXEMPLE 2

A titre de comparaison, on a fabriqué un câble à fibre optique analogue à celui décrit dans l'exemple 1 du document FR-2 803 045. Ce câble comprend une enveloppe extérieure et inclut des fibres optiques. Un gel de remplissage occupe l'espace autour des fibres optiques à l'intérieur de l'enveloppe.

Le composé intermétallique utilisé pour l'absorption de l'hydrogène est incorporé au gel de remplissage placé à l'intérieur de l'enveloppe. Ce gel peut être un gel commercial à base hydrocarbonée comme celui de référence "OPTIFILL 5300" fourni par la société BP. La composition est telle que 5% de poudre de composé intermétallique, préalablement broyée, avec un diamètre moyen de 30 µm, est introduite dans le gel à l'aide d'un malaxeur à bras de Werner. Puis, l'ensemble gel et poudre de composé intermétallique est mis en place dans le câble.

### EXEMPLE 3

A titre de comparaison, on a fabriqué un câble à fibre optique de la manière suivante. Ce câble comprend une enveloppe extérieure et inclut des fibres optiques. Un gel de remplissage occupe l'espace autour des fibres optiques à l'intérieur de l'enveloppe. Ce gel de remplissage est un matériau commercial à base de polybutène contenant un catalyseur, de référence "R1865" fourni par la société MASTER ADHESIVES.

### EXEMPLE 4

On a représenté sur la figure 2 un autre type de câble à fibre optique **20** comprenant des fibres optiques revêtues **21** rassemblées en faisceaux **22** maintenus par une gaine. Les faisceaux **22** sont assemblés dans une enveloppe **23** commune pour former le câble **20**. Le volume laissé libre entre les faisceaux **22** de fibres optiques **21** et l'enveloppe **23** est comblé par un gel de remplissage **24** qui est un composé organique type silicone saturé.

Dans le câble **20**, l'enveloppe **23** est constitué d'une composition absorbant l'hydrogène selon l'invention. Le catalyseur analogue à celui de l'exemple 1. Le composant absorbeur d'hydrogène comprend une matrice en polymère thermoplastique qui est du PBTP (polybutylènetéréphtalate) de référence "VESTODUR 3000" et un composé absorbant l'hydrogène qui est un DEB de référence "S870927" fourni par SIGMA-ALDRICH.

Le composé absorbant l'hydrogène est d'abord mélangé avec le catalyseur de façon mécanique, par exemple dans une jarre pendant quelques heures, par exemple dans des proportions massiques respectives de 75% de composé et 25% de catalyseur. Ce mélange est ensuite incorporé dans la matrice polymère thermoplastique de façon mécanique, par exemple à l'aide d'un mélangeur de type "Brabender", par exemple dans des proportions massiques respectives de 5% de mélange et 95% de polymère thermoplastique, éventuellement accompagné de lubrifiant pour atténuer l'effet d'abrasion et de tensioactifs. On obtient la composition selon l'invention qui est utilisée pour réaliser l'enveloppe du câble, par exemple par extrusion.

### EXEMPLE 5

A titre de comparaison, on a fabriqué un câble à fibre optique analogue à celui décrit dans l'exemple 2 du document FR-2 803 045. Ce câble comprend une enveloppe extérieure en matériau polymère thermoplastique et inclut des fibres optiques. Un gel de remplissage occupe l'espace autour des fibres optiques à l'intérieur de l'enveloppe. Le composé intermétallique utilisé pour l'absorption de l'hydrogène est incorporé au matériau thermoplastique de l'enveloppe.

Le thermoplastique peut être par exemple du PBTP de référence "VESTODUR 3000" sous forme de granulés, et le composé intermétallique est sous forme de poudre de 30 µm. Le mélange entre le thermoplastique et la poudre de composé intermétallique est réalisé à l'aide d'un mélangeur de type Brabender, éventuellement accompagné de lubrifiant pour atténuer l'effet d'abrasion du composé intermétallique et de tensioactifs. La composition est telle que 5% en poids de composé intermétallique est introduite dans le thermoplastique avant l'extrusion de l'ensemble thermoplastique et composé intermétallique.

### EXEMPLE 6

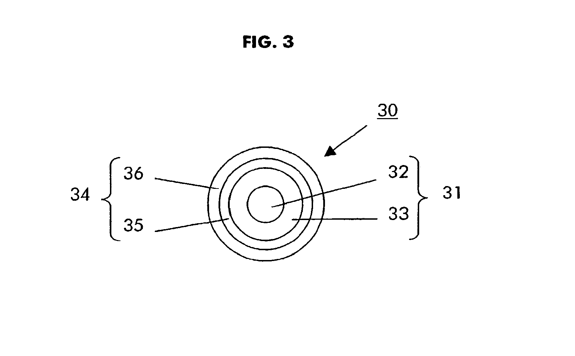

Une fibre optique **30** est représentée en coupe sur la figure 3 qui est utilisable dans un câble de type analogue à celui de la figure 1 ou à celui de la figure 2. Elle comprend une partie guidante **31**, composée d'un coeur **32** et d'une gaine optique **33**, et un revêtement **34** entourant la partie guidante **31**. Le revêtement **34** comporte une couche interne **35** au contact de la partie guidante **31** et une couche externe **36**.
Dans la fibre **30**, la couche externe **36** est constitué d'une composition absorbant l'hydrogène selon l'invention. Le catalyseur analogue à celui de l'exemple 1. Le composant absorbeur d'hydrogène comprend une matrice de polyuréthanne acrylate référence "DSM 3471-2-102" et le composé absorbant l'hydrogène qui est un DEB de référence "S870927" fourni par SIGMA-ALDRICH.

La composition est préparée de la même manière que dans l'exemple 1. Elle est utilisée pour réaliser la couche externe du revêtement de la fibre. Un câble est réalisé en utilisant des fibres **30.** Ce câble est analogue au câble **1** à l'exception du fait que le gel de remplissage est un gel classique qui est un composé organique type silicone saturé.

### EXEMPLE 7

A titre de comparaison, on a fabriqué un câble à fibre optique analogue à celui décrit dans l'exemple 5 incluant des fibres optiques analogue à celle décrite dans l'exemple 3 du document FR-2 803 045. Ce câble comprend une enveloppe extérieure, et un gel de remplissage occupe l'espace autour des fibres optiques à l'intérieur de l'enveloppe. La fibre optique comprend une partie guidante et un revêtement comportant une couche interne et une couche externe.

Le composé intermétallique est incorporé à une matrice polymérique qui est un polyuréthanne acrylate de référence "DSM 3471-2-102". Le mélange de la matrice polymérique et du composé intermétallique est déposé autour de la fibre optique, en tant que revêtement secondaire de la fibre, à l'aide d'un procédé d'enduction. L'épaisseur de ce revêtement est de 30 µm et le diamètre moyen du composé intermétallique est de 5 µm. La composition est telle que 3% en poids de composé intermétallique est introduite dans la matrice polymérique avant le dépôt.

On a évalué la capacité d'absorption de l'hydrogène des différentes compositions précédemment décrites. Les résultats sont exprimés en cm³ par gramme de la composition dans des conditions normales de température et de pression (STP), et rassemblés dans le tableau suivant :

**TABLEAU**

| Exemple | Capacité d'absorption d'hydrogène en cm³ (STP) par gramme de composition |
|---|---|
| 1 | 10,4 |
| 2 | 7,5 |
| 3 | 5,4 |
| 4 | 8,6 |
| 5 | 6,2 |
| 6 | 9,8 |
| 7 | 7,0 |

Les capacités d'absorption de l'hydrogène des compositions selon l'invention, décrites dans les exemples 1, 4, et 6, sont nettement plus importantes que celles des compositions connues de l'art antérieur (exemples 2, 3, 5, et 7).
A titre de comparaison, les compositions décrites dans les exemples 2 à 6 du document EP-0 632 301, correspondant à des polybutènes de caractéristiques différentes, conduisent à des capacités d'absorption comprises entre 0,51 et 2,24cm³(STP)/g.

### EXEMPLE 8

On réalise un câble analogue à celui de l'exemple 1 à l'exception du fait que le composé organique absorbant l'hydrogène est le 1,2-bis(phényléthynyl)benzène.

### EXEMPLE 9

On réalise un câble analogue à celui de l'exemple 1 à l'exception du fait que le composé organique absorbant l'hydrogène est le 9,10-bis(phényléthynyl)anthracène.

### EXEMPLE 10

On réalise un câble analogue à celui de l'exemple 1 à l'exception du fait que le composé organique absorbant l'hydrogène est le 5,12-bis(phényléthynyl)naphtacène.

Les capacités d'absorption de l'hydrogène des compositions des exemples 8, 9 et 10 sont égales ou supérieures à celles des compositions de l'art antérieur.

## Revendications

1. Câble à fibre optique (1) comportant au moins une fibre optique (2) entourée d'un revêtement (4), une enveloppe (5) et une composition absorbant l'hydrogène (6) comprenant un catalyseur et un composant absorbeur d'hydrogène, **caractérisé en ce que** ledit composant absorbeur d'hydrogène est un mélange d'une matrice polymère non-absorbante et d'un composé organique absorbant l'hydrogène comportant au moins une triple liaison carbone-carbone.

2. Câble selon la revendication 1, dans lequel ledit composé organique a pour formule générale: R¹ - C ≡ C - R², dans laquelle R¹ est un atome d'hydrogène et R² est choisi parmi un hydrocarbure acyclique linéaire ou ramifié, un hydrocarbure cyclique, un hydrocarbure saturé, un hydrocarbure insaturé, un hydrocarbure substitué par un hétéroatome.

3. Câble selon la revendication 1, dans lequel ledit composé organique a pour formule générale : R¹ - C ≡ C - R², dans laquelle R¹ et R², identiques ou différents sont choisis parmi un hydrocarbure acyclique linéaire ou ramifié, un hydrocarbure cyclique, un hydrocarbure saturé, un hydrocarbure insaturé, un hydrocarbure substitué par un hétéroatome.

4. Câble selon l'une des revendications précédentes, dans lequel ledit composé organique est sous forme solide ou liquide.

5. Câble selon la revendication 3, dans lequel ledit composé organique est choisi parmi le 1,4-bis(phényléthynyl)benzène, le 1,2-bis(phényléthynyl)benzène, le 9,10-bis(phényléthynyl)anthracène, le 5,12-bis(phenyléthynyl)naphtacène.

6. Câble selon l'une des revendications précédentes, dans lequel ledit composé organique représente au plus 25% en poids dudit composant absorbeur.

7. Câble selon la revendications 6, dans lequel ledit composé organique représente au plus 10% en poids dudit composant absorbeur.

8. Câblé selon l'une des revendications précédentes, dans lequel ledit catalyseur est choisi parmi un métal de transition, un complexe ou un sel d'un métal de transition.

9. Câble selon l'une des revendications précédentes, dans lequel ladite composition est introduite entre ladite fibre optique et ladite enveloppe, constituant un gel de remplissage.

10. Câble selon la revendication 9, dans lequel ladite matrice est choisie parmi un matériau siliconé et un matériau polyoléfinique.

11. Câble selon l'une des revendications précédentes, dans lequel ladite composition constitue ladite enveloppe.

12. Câble selon la revendication 11, dans lequel ladite matrice est un polymère thermoplastique.

13. Câble selon l'une des revendications précédentes, dans lequel ladite composition constitue la couche externe dudit revêtement de la fibre optique.

14. Câble selon l'une des revendications précédentes, dans lequel ladite composition constitue la gaine d'un ruban de fibre optique.

15. Câble selon l'une des revendications 13 et 14, dans lequel ladite matrice est un polyuréthane acrylate.

16. Câble selon l'une des revendications précédentes, dans lequel ladite composition est déposée sous forme de couche sur la surface interne de ladite enveloppe.

## Claims

1. An optical fiber cable (1) comprising at least one optical fiber (2) surrounded by a coating (4), a jacket (5), and a hydrogen-absorbing composition (6) comprising a catalyst and a hydrogen-absorbing component, **characterized in that** said hydrogen-absorbing component is a mixture of a non-absorbent polymer matrix and a hydrogen-absorbing compound comprising at least one carbon-carbon triple bond.

2. A cable according to clam 1, wherein said organic compound has general formula R¹ - C ≡ C - R², wherein R¹ is a hydrogen atom and R² is chosen from among a linear or branched acylic hydrocarbon, a cyclical hydrocarbon, a saturated hydrocarbon, an unsaturated hydrocarbon, or a heteroatom-substituted hydrocarbon.

3. A cable according to claim 1, wherein the general formula of said organic compound is R¹ - C - ≡ C - R², wherein R¹ and R², which are identical or different, are chosen from among a linear or branched acylic hydrocarbon, a cyclical hydrocarbon, a saturated hydrocarbon, an unsaturated hydrocarbon, or a heteroatom-substituted hydrocarbon.

4. A cable according to one of the preceding claims, wherein said organic compound is in a solid or liquid form.

5. A cable according to claim 3, wherein said organic compound is chosen from among 1,4-bis (phenylethynyl) benzene, 1,2-bis (phenylethynyl) benzene, 9,10-bis (phenylethynyl) anthracene, or 5,12-bis (phenylethynyl) naphtacene.

6. A cable according to one of the preceding claims, wherein said organic compound represents at most 25% by weight of said absorbing component.

7. A cable according to claim 6, wherein said organic compound represents at most 10% by weight of said absorbing component.

8. A cable according to one of the preceding claims, wherein said catalyst is chosen from among a transition metal, a complex or a salt of a transition metal.

9. A cable according to one of the preceding claims, wherein said composition is introduced between said optical fiber and said jacket, constituting a filler gel.

10. A cable according to claim 9, wherein said matrix is chosen from among a siliconized material and a polyolefinic material.

11. A cable according to one of the preceding claims, wherein said composition constitutes said jacket.

12. A cable according to claim 11, wherein said matrix is a thermoplastic polymer.

13. A cable according to one of the preceding claims, wherein said composition constitutes the outer layer of said optical fiber coating.

14. A cable according to one of the preceding claims, wherein said composition constitutes the cladding of an optical fiber ribbon.

15. A cable according to one of the claims 13 and 14, wherein said matrix is a polyurethane acrylate.

16. A cable according to one of the preceding claims, wherein said composition is deposited in layer form on the inner surface of said jacket.

## Patentansprüche

1. Glasfaserkabel (1) mit mindestens einer von einer Beschichtung (4) umhüllten Glasfaser (2), einer Ummantelung (5) und einer wasserstoffabsorbierenden Verbindung (6), umfassend einen Katalysator und einen wasserstoffabsorbierenden Bestandteil, **dadurch gekennzeichnet, dass** der besagte wasserstoffabsorbierende Bestandteil eine Mischung aus einer nicht absorbierenden Polymermatrix und einer wasserstoffabsorbierenden organischen Verbindung mit mindestens einer Kohlenstoff-Kohlenstoff-Dreifachbindung ist.

2. Kabel nach Anspruch 1, wobei die allgemeine Formel der besagten organischen Verbindung R¹ - C = C - R² ist, worin R¹ ein Wasserstoffatom ist und R² unter einem linearen oder verzweigten acyclischen Kohlenwasserstoff, einem acyclischen Kohlenwasserstoff, einem gesättigten Kohlenwasserstoff, einem ungesättigten Kohlenwasserstoff und einem durch ein Heteroatom ersetzten Kohlenwasserstoff gewählt wird.

3. Kabel nach Anspruch 1, wobei die allgemeine Formel der besagten organischen Verbindung R¹ - C = C - R² ist, worin R¹ und R² identisch oder verschieden sind und unter einem linearen oder verzweigten acyclischen Kohlenwasserstoff, einem cyclischen Kohlenwasserstoff, einem gesättigten Kohlenwasserstoff, einem ungesättigen Kohlenwasserstoff und einem durch ein Heteroatom ersetzten Kohlenwasserstoff gewählt werden.

4. Kabel nach einem der vorstehenden Ansprüche, wobei die besagte organische Verbindung eine feste oder eine flüssige Form aufweist.

5. Kabel nach Anspruch 3, wobei die besagte organische Verbindung unter 1,4-bis(Phenylethynyl)Benzol, 1,2-bis(Phenylethynyl)Benzol, 9,10-bis(Phenylethynyl)Anthracen und 5,12-bis(Phenylethynyl)Naphtacen gewählt wird.

6. Kabel nach einem der vorstehenden Ansprüche, wobei die besagte organische Verbindung, bezogen auf das Gewicht, höchstens 25 % des besagten absorbierenden Bestandteils darstellt.

7. Kabel nach Anspruch 6, wobei die besagte organische Verbindung, bezogen auf das Gewicht, höchstens 10 % des besagten absorbierenden Bestandteils darstellt.

8. Kabel nach einem der vorstehenden Ansprüche, wobei der besagte Katalysator unter einem Übergangsmetall, einem Komplex oder einem Salz eines Übergangsmetalls gewählt wird.

9. Kabel nach einem der vorstehenden Ansprüche, wobei die besagte Verbindung zwischen der besagten Glasfaser und der besagten Ummantelung eingelassen wird und sein Füllgel bildet.

10. Kabel nach Anspruch 9, wobei die besagte Matrix unter einem Silikonmaterial und einem Polyolefin-Material gewählt wird.

11. Kabel nach einem der vorstehenden Ansprüche, wobei die besagte Verbindung die besagte Ummantelung bildet.

12. Kabel nach Anspruch 11, wobei die besagte Matrix ein thermoplastisches Polymer ist.

13. Kabel nach einem der vorstehenden Ansprüche, wobei die besagte Verbindung die äußere Schicht der besagten Beschichtung der Glasfaser bildet.

14. Kabel nach einem der vorstehenden Ansprüche, wobei die besagte Verbindung den Mantel eines Glasfaserbandes bildet.

15. Kabel nach einem der Ansprüche 13 und 14, wobei die besagte Matrix ein Polyurethan-Acrylat ist.

16. Kabel nach einem der vorstehenden Ansprüche, wobei die besagte Verbindung in Form einer Schicht auf der Innenfläche der besagten Ummantelung aufgebracht wird.
